# EUROPEAN PATENT SPECIFICATION

(11) **EP 3 432 537 B1**
(45) Date of publication and mention of the grant of the patent: **01.09.2021**
(21) Application number: 17181887.5
(22) Date of filing: 18.07.2017
(51) Int. Cl.: H04L 29/06, H04W 12/06

(54) **SECURED AUTHENTICATION IN LPWA COMMUNICATION NETWORKS**
GESICHERTES AUTENTIFIZIEREN IN LPWA-KOMMUNIKATIONSNETZWERKEN
AUTENTIFICATION SECURISÉE DANS UN RÉSEAU LPWA

(43) Date of publication of application: 23.01.2019
(73) Proprietor: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- WO-A1-2015/099956
- GB-A- 2 536 509
- US-B1- 8 458 800
- TSAO R ALEXANDER COOPER POWER SYSTEMS M DOHLER CTTC V DAZA A LOZANO UNIVERSITAT POMPEU FABRA T: "A Security Threat Analysis for Routing over Low-Power and Lossy Networks; draft-ietf-roll-security-threats-03.txt", A SECURITY THREAT ANALYSIS FOR ROUTING OVER LOW-POWER AND LOSSY NETWORKS; DRAFT-IETF-ROLL-SECURITY-THREATS-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 26 June 2013 (2013-06-26), pages 1-48, XP015094881, [retrieved on 2013-06-26]
- ASSADERAGHI FARI ET AL: "Privacy and security: Key requirements for sustainable IoT growth", 2017 SYMPOSIUM ON VLSI TECHNOLOGY, JSAP, 5 June 2017 (2017-06-05), XP033135103, DOI: 10.23919/VLSIT.2017.7998185 [retrieved on 2017-07-31]

## Description

### TECHNICAL FIELD

In general, the invention relates to wireless communication networks. More specifically, the invention relates to secure devices, methods and systems for wireless communication networks based on Low-Power Wide-Area (LPWA) technology, in particular narrowband loT communication networks.

### BACKGROUND

Narrowband loT (NB loT) is a new technology standard, designed to broaden the future of loT connectivity. Ratified by the 3GPP, NB loT is starting to being deployed by mobile network operators across the globe. NB loT is a Low-Power Wide-Area (LPWA) network technology, developed to enable efficient communication for mass distributed NB loT communication devices across wide geographical footprints as well in scenarios with deep indoor penetration, e.g. within urban infrastructure. It's ideal for devices that generate low data traffic, rely on batteries and typically have a long device life cycle. A battery life of more than 10 years can be supported for a wide range of use cases. Moreover, NB loT significantly improves the system capacity and spectrum efficiency, especially in deep coverage. Thus, NB loT can be used to connect simple communication devices, such as sensors, to drive new data streams, reduce operational costs and create new business models. Smart Meters, Smart Bins, environmental monitoring and precision agriculture are just a few applications of NB loT. Such devices are also referred to as NB loT cellular devices. More information about NB loT can be found in the 3GPP technical report TR 45.820.

Due to the generally limited hardware resources of a communication device based on LPWA technology and, in particular, NB loT technology, security mechanisms known, for instance, from smart phones cannot be used for such a communication device. Thus, there is a need for improved devices, methods and systems for wireless communication networks based on LPWA technology, in particular narrowband loT networks.

The following two scientific articles demonstrate the background of the invention: Tsao et al: "A Security Threat Analysis for Routing over Low-Power and Lossy Networks", IETF, provides a security threat analysis for routing over low-power and lossy networks (LLN), including defining and evaluating security threats, describing appropriate countermeasures as well as providing security recommendations for incorporation into LLN routing protocols.

Assaderaghi et al: "Privacy and security: Key requirements for sustainable loT growth", 2017 Symposium on VLSI Technology, JSAP, provides a high-level overview of privacy and security requirements of loT devices, in particular from a power consumption perspective. Hardware based strong authentication is suggested for loT devices.

### SUMMARY OF THE INVENTION

It is an object of the invention to provide improved devices, methods and systems for wireless communication networks based on LPWA technology, in particular narrowband IOT networks.

The foregoing and other objects are achieved by the subject matter of the independent claims. Further implementation forms are apparent from the dependent claims, the description and the figures.

Embodiments of the present invention relate to communication devices that use NB loT technology. Although the description is written by using the NB loT as the access technology, the embodiments are applicable also for communication devices that use other wireless communication technologies as well, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system. As used herein, NB loT technology can comprises, for instance, narrowband LTE, narrowband M2M, and narrowband OFDMA techniques.

In embodiments of the present invention communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention communication devices may include one or more radio modules (or short radios) including circuitry and/or logic to perform wireless communication between the communication devices. In embodiments of the present invention the radio modules may include one or more wireless receivers (Rx) including circuitry and/or logic to receive wireless communication signals, RF signals, frames, blocks, transmission streams, packets, messages, data items, and/or data. In embodiments of the present invention the radio modules may include one or more wireless transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention a communication device may include a processor. The processor may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor control unit may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

In embodiments of the present invention, the communication device can be a wearable device, a sensor, small device, a mobile device, and/or any other device, which may be, for example, powered by a battery and/or any other power source having a limited capacity.

In embodiments of the present invention, the communication device can be configured to communicate over one or more narrowband channels, for example, channels with a channel bandwidth of about 200 Kilohertz (KHz). In embodiments of the invention a minimum system bandwidth of 200 kHz on both downlink and uplink can be used. In each direction, the 200 kHz channel can be divided into narrow bandwidth subcarriers, for instance, 48 on the downlink and 36 on the uplink. In the downlink direction, Orthogonal Frequency Division Multiple Access (OFDMA) can be used. In the uplink direction Frequency Division Multiple Access (FDMA) can be used.

More specifically, according to a first aspect the invention relates to a communication device for communicating data over a low power wide area, LPWA, communication network, wherein the communication device comprises: an application processor configured to process data, for instance, by running an application; a memory configured to store data; a radio configured to transmit and/or receive data over the LPWA communication network; and a security system. The security system is configured to operate more than one logically separated sets of security domains, including a first set of security domains, on the processor and the memory. Each set of security domains comprises a processor security domain and a memory security domain, which are configured to interact with each other to provide at least one respective security function.

The security system is further configured to restrict access to the radio to one or more selected sets of the more than one sets of security domains, including the first set of security domains, and wherein the processor security domain and the memory security domain of the first set of security domains are configured to interact with each other for authenticating the communication device within the LPWA communication network.

The security system can be configured to operate the first set of security domains to be accessible by the operator of the LPWA communication network only. Thus, the security system can restrict access to the authentication function provided by the processor security domain and the memory security domain of the first set of security domains to the operator of the LPWA communication network only. The more than one sets of security domains can comprise a second set of security domains for providing a second security function. The security system can be implemented in hardware and/or software. In an embodiment, the security system can be implemented using virtualization techniques.

In a further possible embodiment of the communication device according to the first aspect, the processor is configured to implement a real-time execution environment based on a real-time operating system and wherein the security system is configured to operate the respective processor security domains of the more than one sets of security domains in parallel to the real-time execution environment.

In a further possible embodiment of the communication device the memory comprises in addition to the respective memory security domains of the more than one sets of security domains a real-time memory portion that is configured to be accessible from the real-time execution environment, for instance, from an application running therein, and the respective processor security domains of the more than one sets of security domains, for instance, from respective applications running therein.

In a further possible embodiment of the communication device the memory can comprise a RAM, a ROM and/or a Flash memory.

In a further possible embodiment of the communication device the memory security domain of the first set of security domains comprises a cryptographic authentication key for authenticating the communication device within the LPWA communication network.

In a further possible embodiment of the communication device at least one of the memory security domains of the more than one sets of security domains comprises a cryptographic encryption key for encrypting data.

In a further possible embodiment of the communication device the more than one sets of security domains further comprises a second set of security domains and wherein the security system is configured to restrict access to the first set of security domains to a first entity and to restrict access to the second set of security domains to a second entity, wherein the security system is further configured to operate a further memory security domain to be accessible by both the first entity and the second entity.

In a further possible embodiment of the communication device the security system is configured to restrict access to the first set of security domains to the first entity on the basis of a first set of access control rules and to restrict access to the second set of security domains to the second entity on the basis of a second set of access control rules, wherein the second set of access rules differs from the first set of access rules.

In a further possible embodiment of the communication device the processor, the memory and the radio are implemented as a system on a chip.

In a further possible embodiment the communication device further comprises a communication bus, wherein the communication bus is configured to exchange data between the processor, the memory and the radio.

In a further possible embodiment the communication device further comprises a sensor configured to collect data, wherein the security system is further configured to restrict access to the sensor to one or more selected sets of the more than one sets of security domains.

In a further possible embodiment the communication device further comprises an actuator, wherein the security system is further configured to restrict access to the actuator to one or more selected sets of the more than one sets of security domains.

In a further possible embodiment the communication device is configured to communicate over a narrowband loT communication network.

According to a second aspect the invention relates to a corresponding method of operating a communication device for communicating data over a low power wide area, LPWA, communication network, the communication device comprising a processor configured to process data, a memory configured to store data and a radio configured to transmit and/or receive data over the LPWA communication network, wherein the method comprises the step of operating more than one sets of logically separated security domains, including a first set of security domains, on the processor and the memory, wherein each set of security domains comprises a processor security domain and a memory security domain, which are configured to interact with each other to provide at least one respective security function, wherein the security system is further configured to restrict access to the radio to one or more selected sets of the more than one sets of security domains, including the first set of security domains, and wherein the processor security domain and the memory security domain of the first set of security domains are configured to interact with each other for authenticating the communication device with the LPWA communication network.

According to a third aspect the invention relates to a computer program product comprising program code for performing the method according to the second aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a NB loT communication network comprising several communication devices according to an embodiment;
Fig. 2 shows a more detailed schematic diagram of a communication device according to an embodiment; and
Fig. 3 shows a diagram illustrating a method for operating a communication device according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

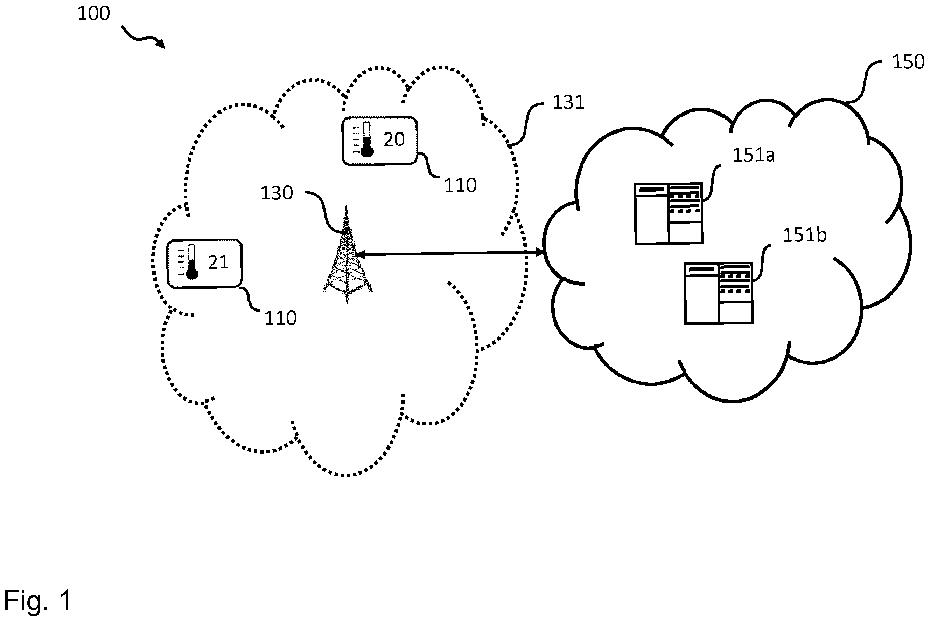

Figure 1 shows a schematic diagram of a cellular communication network 100. The cellular communication network 100 is a low-power wide-area (LPWA) communication network 100, in particular a LPWA communication network 100 based on narrowband (NB) loT technology, as described, for instance, in the 3GPP technical report TR 45.820.

The cellular communication network 100 comprises a radio access network 131, a core network 150 and a plurality of NB loT communication devices 110. In the exemplary embodiment shown in figure 1, the plurality of NB loT communication devices 110 are smart temperature sensors configured to monitor temperature data and to provide the temperature data via the core network 150 of the NB loT communication network 100 to a remote server 151a configured to collect and analyze the temperature data from the plurality of NB loT communication devices 110.

For the sake of clarity figure 1 shows only a single exemplary base station 130, which is part of the radio access network 131. In other embodiments the radio access network 131 can comprises a plurality of base stations similar to the exemplary base station 130 shown in figure 1.

The core network 150 comprises entities or functions for operating the NB loT communication network 100. In the exemplary embodiment, shown in figure 1 the core network 150 comprises an authentication entity 151b configured to perform an authentication procedure with each of the NB loT communication devices 110 before granting full access to the NB loT communication network 100.

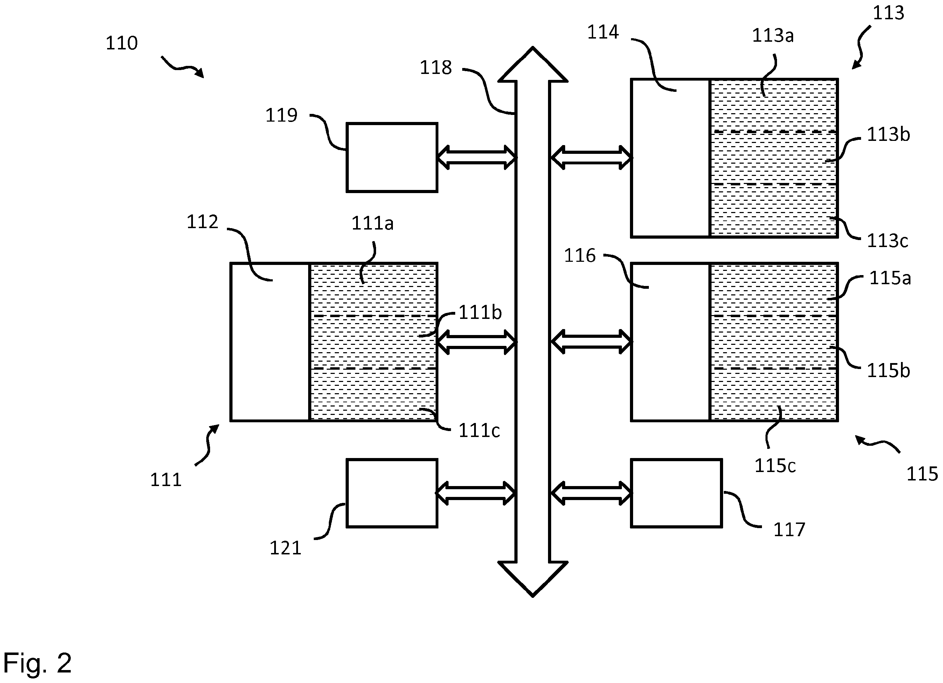

Under further reference to figure 2 in the following an embodiment of the NB loT communication device 110 will be described. The communication device 110 comprises a processor 111 configured to process data and running applications providing one or more security functions, a memory comprising a RAM 113 and a Flash memory 115 configured to store volatile and non-volatile data (in particular executable application code), respectively, and a radio 117 configured to transmit and/or receive data over the NB loT communication network 100. In an embodiment, the radio 117 can be configured to use one or more subcarriers of a channel bandwidth of about 200 Kilohertz (KHz) to communicate with the base station on the basis of an OFDMA scheme in the downlink direction and on the basis of a FDMA scheme in the uplink direction. Alternatively to or in addition to the Flash memory 115 the communication device 110a can comprise a ROM as well.

In an embodiment, the processor 111, the RAM 113, the Flash memory 115 and/or the radio 117 can be implemented as a system on a chip. As illustrated in figure 2, in an embodiment the communication device 110 further comprises a communication bus system 118 configured to provide for the flow of data between the processor 111, the RAM 113, the Flash memory 115 and the radio 117.

In an embodiment, the communication device 110a further comprises a sensor 119 configured to collect data, wherein the security system of the communication device 110a is further configured to restrict access to the sensor 119 to one or more selected sets of the three sets of security domains 111a-c, 113a-c, 115a-c. For example, the security system can be configured to restrict access to the sensor 119 to the first set of security domains 111a, 113a, 115a and/or the second set of security domains 111b, 113b, 115b.

In addition or alternatively, in an embodiment the communication device 110a further comprises an actuator 121, wherein the security system of the communication device is further configured to restrict access to the actuator 121 to one or more selected sets of the three sets of security domains 111 a-c, 113a-c, 115a-c. For example, the security system can be configured to restrict access to the actuator 121 to the first set of security domains 111a, 113a, 115a and/or the third set of security domains 111c, 113c, 115c.

The communication device 110 further comprises a security system configured to operate one or more sets of logically separated security domains 111a-c, 113a-c, 115a-c on the processor 111, the volatile RAM 113 and the non-volatile Flash memory 115. By way of example, in the embodiment shown in figure 2 the security system of the communication device 110 operates three different sets of security domains, namely a first set of security domains, comprising a processor security domain 111a, a RAM security domain 113a and a Flash memory security domain 115a, a second set of security domains, comprising a processor security domain 111b, a RAM security domain 113b and a Flash memory security domain 115b, and a third set of security domains, comprising a processor security domain 111c, a RAM security domain 113c and a Flash memory security domain 115c.

The respective security domains of a set of security domains, for instance, the processor security domain 111a, the RAM security domain 113a and the Flash memory security domain 115a of the first set of security domains are logically separated from the security domains of other sets of security domains and are configured to interact with each other to provide at least one respective security function.

In the embodiment shown in figure 2 the processor security domain 111a, the RAM security domain 113a and the Flash memory security domain 115a of the first set of security domains are configured to interact with each other for providing a seceurity function in the form of an authentication function, i.e. for authenticating the communication device 110 with the authentication entity 151b of the core network 150 of the NB loT communication network 100.

The security system of the communication device 110 shown in figure 2 is further configured to restrict access to the radio 117 to one or more selected sets of the one or more sets of security domains. In the embodiment shown in figure 2 the security system is configured to restrict access to the radio 117 to the first set of security domains only, i.e. only the processor security domain 111a of the first set of security domains can access the radio 117 and interact therewith, for instance, for transmitting sensor data collected by the sensor 119 over the NB loT communication network 100. In another embodiment, the security system of the communication device 110 shown in figure 2 can be configured to allow the first and the second set of security domains access to the radio 117, but not the third set of security domains.

The security system of the communication device 110 shown in figure 2 can be implemented in hardware and/or software. In an embodiment, the security system can be implemented using virtualization techniques. In an embodiment, the different RAM security domains 113a-c can be provided by different partitions of the RAM 113. In an embodiment, the data in the different RAM security domains 113a-c are accessible using "memory mapped I/O". As will be appreciated, the main purpose of the security system of the communication device 110a and its security domains is to isolate the processing of security critical tasks from standard processing in the real-time execution environment 112. This can be achieved by using a single processor-core having two execution modes, one secure mode and another mode for standard processes. In this case the RAM and registers assigned to the single core are duplicated and one set is assigned to the normal mode, i.e. the real-time execution environment 112, and the other set to the secure execution mode, i.e. the secure execution environment. According to another embodiment, the security system of the communication device 110a and its security domains can be implemented using a multi-processor-core architecture with at least one secure-core with an own RAM, which is dedicated to executing only security-critical processes.

As illustrated in figure 2, the processor 111 can be configured to implement a real-time execution environment 112 based on a real-time operating system. An application running in the real-time execution environment 112 can access the security functions provided by the different sets of security domains, if the application has the corresponding access rights. In the embodiment shown in figure 2, the security system of the communication device 110 is configured to operate the respective processor security domains 111a-c of the three sets of security domains in parallel to the real-time execution environment 112.

In an embodiment, both the RAM 113 and the Flash memory 115 can comprises in addition to the respective RAM security domains 113a-c and the Flash memory security domains 115a-c a real-time RAM portion 114 and a real-time Flash memory portion 116, which can be accessed from the real-time execution environment 112 of the processor and the respective processor security domains 111a-c of the three sets of security domains.

For providing the authentication security function the Flash memory security domain 115a of the first set of security domains can store a cryptographic authentication key for authenticating the communication device 110 within the NB loT communication network 100, i.e. with the authentication entity 151b of the core network 150 of the NB loT communication network 100. In an embodiment, the security system of the communication device 110 is configured such that only the corresponding processor security domain 111a (i.e. a secure application running therein) can retrieve the cryptographic authentication key stored in the Flash memory security domain 115a of the first set of security domains.

As already mentioned above, one or more of the sets of security domains operated by the security domains can be configured to provide additional security functions besides the authentication function provided by the first set of security domains. For instance, one or more of the sets of security domains could be configured to provide a security function in form of an end-to-end encryption of the data collected by the sensor 119 of the communication device 110a and/or a security function in form of a firewall configured to filter data being received and/or being transmitted via the radio 117 on the basis of a set of filter rules. For instance, the Flash memory security domain 115b of the second set of security domains could store a cryptographic encryption key used by a secure application running in the processor security domain 111b of the second set of security domains for providing an end-to-end data encryption. By way of example, the Flash memory security domain 115c of the third set of security domains could store a set of filter rules used by a secure application running in the processor security domain 111c of the third set of security domains for filtering data being received and/or being transmitted via the radio 117.

In a further embodiment, the security system of the communication device 110 can be configured to restrict access to the first set of security domains 111a, 113a, 115a to a first entity only, for instance, the operator of the NB loT communication network 100, and to restrict access to the second set of security domains 111b, 113b, 115b to a second entity only, for instance, the user of the communication device 110. To this end, the security system can comprise for each set of security domains a corresponding set of access control rules, which can differ from set to set. In an embodiment, the access control rules could allow access to the third set of security domains 111c, 113c, 115c to both the first entity and the second entity. In other words, in an embodiment, a set of security domains, for instance, the third set of security domains 111c, 113c, 115c can be shared by the first entity and the second entity.

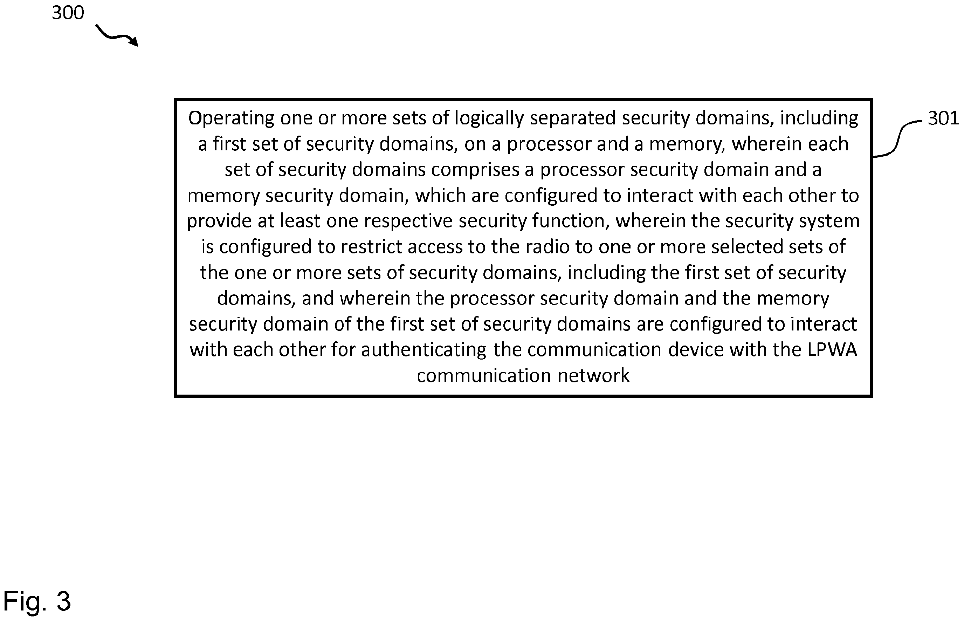

Figure 3 shows a diagram illustrating a corresponding method 300 of operating the communication device 110. The method 300 comprises the step 301 of operating the one or more sets of logically separated security domains 111a-c, 113a-c, 115a-c, including the first set of security domains 111a, 113a, 115a, on the processor 111 and the memory 113, 115, wherein each set of security domains 111a-c, 113a-c, 115a-c comprises a processor security domain 111a-c and a memory security domain 113a-c, 115a-c, which are configured to interact with each other to provide at least one respective security function, wherein the security system is further configured to restrict access to the radio 117 to one or more selected sets of the one or more sets of security domains 111a-c, 113a-c, 115a-c, including the first set of security domains 111a, 113a, 115a, and wherein the processor security domain 111a and the memory security domain 113a, 115a of the first set of security domains 111a, 113a, 115a are configured to interact with each other for authenticating the communication device 110a within the NB loT communication network 100.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention, as defined by the appended claims.

## Claims

1. A communication device (110) for communicating data over a low power wide area, LPWA, communication network (100), wherein the communication device (110) comprises:
a processor (111) configured to process data;
a memory (113, 115) configured to store data;
a radio (117) configured to transmit and/or receive data over the LPWA communication network (100); and
a security system;
**characterized in that**
the security system is configured to operate more than one logically separated sets of security domains (111a-c, 113a-c, 115a-c), including a first set of security domains (111a, 113a, 115a), on the processor (111) and the memory (113, 115), wherein each set of security domains comprises a processor security domain (111a-c) and a memory security domain (113a-c, 115a-c), which are configured to interact with each other to provide at least one respective security function, wherein the security system is further configured to restrict access to the radio (117) to the first set of security domains (111a, 113a, 115a), and wherein the processor security domain (111a) and the memory security domain (113a, 115a) of the first set of security domains (111a, 113a, 115a) are configured to interact with each other for authenticating the communication device (110a-d) within the LPWA communication network (100).

2. The communication device (110) of claim 1, wherein the processor (111) is configured to implement a real-time execution environment (112) based on a real-time operating system and wherein the security system is configured to operate the respective processor security domains (111a-c) of the more than one sets of security domains (111a-c, 113a-c, 115a-c) in parallel to the real-time execution environment (112).

3. The communication device (110) of claim 2, wherein the memory (113, 115) comprises in addition to the respective memory security domains (113a-c, 115a-c) of the more than one sets of security domains (111a-c, 113a-c, 115a-c) a real-time memory portion (114, 116) that is configured to be accessible from the real-time execution environment (112) and the respective processor security domains (111a-c) of the more than one sets of security domains (111a-c, 113a-c, 115a-c).

4. The communication device (110) of any one of the preceding claims, wherein the memory (113, 115) comprises a RAM (113), a ROM and/or a Flash memory (115).

5. The communication device (110) of any one of the preceding claims, wherein the memory security domain (113a, 115a) of the first set of security domains (111a, 113a, 115a) comprises a cryptographic authentication key for authenticating the communication device (110a-d) within the LPWA communication network (100).

6. The communication device (110) of any one of the preceding claims, wherein at least one of the memory security domains (113a-c, 115a-c) of the more than one sets of security domains (111a-c, 113a-c, 115a-c) comprises a cryptographic encryption key for encrypting data.

7. The communication device (110) of any one of the preceding claims, wherein the more than one sets of security domains (111a-c, 113a-c, 115a-c) further comprises a second set of security domains (111b, 113b, 115b) and wherein the security system is configured to further restrict access to the first set of security domains (111a, 113a, 115a) to a first entity and to restrict access to the second set of security domains (111 b, 113b, 115b) to a second entity, wherein the security system is further configured to operate a further memory security domain (113c, 115c) to be accessible by both the first entity and the second entity.

8. The communication device (110) of claim 7, wherein the security system is configured to further restrict access to the first set of security domains (111a, 113a, 115a) to the first entity on the basis of a first set of access control rules and to restrict access to the second set of security domains (111b, 113b, 115b) to the second entity on the basis of a second set of access control rules, wherein the second set of access control rules differs from the first set of access control rules.

9. The communication device (110) of any one of the preceding claims, wherein the processor (111), the memory (113, 115) and the radio (117) are implemented as a system on a chip.

10. The communication device (110) of any one of the preceding claims, wherein the communication device (110) further comprises a communication bus (118), wherein the communication bus (118) is configured to exchange data between the processor (111), the memory (113, 115) and the radio (117).

11. The communication device (110) of any one of the preceding claims, wherein the communication device (110) further comprises a sensor (119) configured to collect data and wherein the security system is further configured to restrict access to the sensor (119) to one or more selected sets of the one or more sets of security domains (111a-c, 113a-c, 115a-c).

12. The communication device (110) of any one of the preceding claims, wherein the communication device (110) further comprises an actuator (121) and wherein the security system is further configured to restrict access to the actuator (121) to one or more selected sets of the more than one sets of security domains (111a-c, 113a-c, 115a-c).

13. The communication device (110) of any one of the preceding claims, wherein the communication device (110) is configured to communicate over a narrowband loT communication network (100).

14. A method (300) of operating a communication device (110) for communicating data over a low power wide area, LPWA, communication network (100), the communication device (110) comprising a processor (111) configured to process data, a memory (113, 115) configured to store data and a radio (117) configured to transmit and/or receive data over the LPWA communication network (100), wherein the method (300) is:
**characterized by**
operating (301) more than one logically separated sets of security domains (111a-c, 113a-c, 115a-c), including a first set of security domains (111a, 113a, 115a), on the processor (111) and the memory (113, 115), wherein each set of security domains (111a-c, 113a-c, 115a-c) comprises a processor security domain (111a-c) and a memory security domain (113a-c, 115a-c), which are configured to interact with each other to provide at least one respective security function, wherein the security system is further configured to restrict access to the radio (117) to the first set of security domains (111a, 113a, 115a), and wherein the processor security domain (111a) and the memory security domain (113a, 115a) of the first set of security domains (111a, 113a, 115a) are configured to interact with each other for authenticating the communication device (110a-d) within the LPWA communication network (100).

15. A computer program product comprising program code for performing the method (300) of claim 14, when executed on a computer or a processor.

## Patentansprüche

1. Kommunikationseinrichtung (110) zum Kommunizieren von Daten über ein Low Power Wide Area (LPWA, Niedrigenergieweitverkehr)-Kommunikationsnetz (100), wobei die Kommunikationseinrichtung (110) Folgendes umfasst:
einen Prozessor (111), der konfiguriert ist, Daten zu verarbeiten;
einen Speicher (113, 115), der konfiguriert ist, Daten zu speichern;
eine Funkeinrichtung (117), die konfiguriert ist, Daten über das LPWA-Kommunikationsnetz (100) zu senden und/oder zu empfangen; und
ein Sicherheitssystem;
**dadurch gekennzeichnet, dass**
das Sicherheitssystem konfiguriert ist, mehr als einen logisch getrennten Satz von Sicherheitsdomänen (111a-c, 113a-c, 115a-c), einschließlich eines ersten Satzes von Sicherheitsdomänen (111a, 113a, 115a), auf dem Prozessor (111) und dem Speicher (113, 115) zu betreiben, wobei jeder Satz von Sicherheitsdomänen eine Prozessor-Sicherheitsdomäne (llla-c) und eine Speicher-Sicherheitsdomäne (113a-c, 115a-c) umfasst, die konfiguriert sind, miteinander zu wechselwirken, um mindestens eine jeweilige Sicherheitsfunktion zu liefern, wobei das Sicherheitssystem ferner konfiguriert ist, den Zugriff auf die Funkeinrichtung (117) auf den ersten Satz von Sicherheitsdomänen (111a, 113a, 115a) einzuschränken, und wobei die Prozessor-Sicherheitsdomäne (111a) und die Speicher-Sicherheitsdomäne (113a, 115a) des ersten Satzes von Sicherheitsdomänen (111a, 113a, 115a) konfiguriert sind, miteinander zum Authentifizieren der Kommunikationseinrichtung (110a-d) innerhalb des LPWA-Kommunikationsnetzes (100) zu wechselwirken.

2. Kommunikationseinrichtung (110) nach Anspruch 1, wobei der Prozessor (111) konfiguriert ist, eine Echtzeit-Prozessablaufumgebung (112) auf Basis eines Echtzeit-Betriebssystems zu implementieren, und wobei das Sicherheitssystem konfiguriert ist, die jeweiligen Prozessor-Sicherheitsdomänen (111a-c) des mehr als einen Satzes von Sicherheitsdomänen (111a-c, 113a-c, 115a-c) parallel zu der Echtzeit-Prozessablaufumgebung (112) zu betreiben.

3. Kommunikationseinrichtung (110) nach Anspruch 2, wobei der Speicher (113, 115) zusätzlich zu den jeweiligen Speicher-Sicherheitsdomänen (113a-c, 115a-c) des mehr als einen Satzes von Sicherheitsdomänen (111a-c, 113a-c, 115a-c) einen Echtzeit-Speicherbereich (114, 116) umfasst, der konfiguriert ist, von der Echtzeit-Prozessablaufumgebung (112) und den jeweiligen Prozessor-Sicherheitsdomänen (llla-c) des mehr als einen Satzes von Sicherheitsdomänen (111a-c, 113a-c, 115a-c) zugänglich zu sein.

4. Kommunikationseinrichtung (110) nach einem der vorstehenden Ansprüche, wobei der Speicher (113, 115) ein RAM (113), ein ROM und/oder einen Flash-Speicher (115) umfasst.

5. Kommunikationseinrichtung (110) nach einem der vorstehenden Ansprüche, wobei die Speicher-Sicherheitsdomäne (113a, 115a) des ersten Satzes von Sicherheitsdomänen (111a, 113a, 115a) einen kryptographischen Authentifizierungsschlüssel zum Authentifizieren der Kommunikationseinrichtung (110a-d) innerhalb des LPWA-Kommunikationsnetzes (100) umfasst.

6. Kommunikationseinrichtung (110) nach einem der vorstehenden Ansprüche, wobei mindestens eine der Speicher-Sicherheitsdomänen (113a-c, 115a-c) des mehr als einen Satzes von Sicherheitsdomänen (111a-c, 113a-c, 115a-c) einen kryptographischen Verschlüsselungsschlüssel zum Verschlüsseln von Daten umfasst.

7. Kommunikationseinrichtung (110) nach einem der vorstehenden Ansprüche, wobei der mehr als eine Satz von Sicherheitsdomänen (111a-c, 113a-c, 115a-c) ferner einen zweiten Satz von Sicherheitsdomänen (111b, 113b, 115b) umfasst, und wobei das Sicherheitssystem konfiguriert ist, ferner den Zugriff auf den ersten Satz von Sicherheitsdomänen (111a, 113a, 115a) auf eine erste Entität einzuschränken und den Zugriff auf den zweiten Satz von Sicherheitsdomänen (111b, 113b, 115b) auf eine zweite Entität einzuschränken, wobei das Sicherheitssystem ferner konfiguriert ist, eine weitere Speicher-Sicherheitsdomäne (113c, 115c) zu betreiben, um von sowohl der ersten Entität als auch der zweiten Entität zugänglich zu sein.

8. Kommunikationseinrichtung (110) nach Anspruch 7, wobei das Sicherheitssystem konfiguriert ist, ferner den Zugriff auf den ersten Satz von Sicherheitsdomänen (111a, 113a, 115a) auf die erste Entität auf Basis eines ersten Satzes von Zugangssteuerungsregeln einzuschränken und den Zugriff auf den zweiten Satz von Sicherheitsdomänen (111b, 113b, 115b) auf die zweite Entität auf Basis eines zweiten Satzes von Zugangssteuerungsregeln einzuschränken, wobei der zweite Satz von Zugangssteuerungsregeln sich von dem ersten Satz von Zugangssteuerungsregeln unterscheidet.

9. Kommunikationseinrichtung (110) nach einem der vorstehenden Ansprüche, wobei der Prozessor (111), der Speicher (113, 115) und die Funkeinrichtung (117) als ein System auf einem Chip implementiert sind.

10. Kommunikationseinrichtung (110) nach einem der vorstehenden Ansprüche, wobei die Kommunikationseinrichtung (110) ferner einen Kommunikationsbus (118) umfasst, wobei der Kommunikationsbus (118) konfiguriert ist, Daten zwischen dem Prozessor (111), dem Speicher (113, 115) und der Funkeinrichtung (117) auszutauschen.

11. Kommunikationseinrichtung (110) nach einem der vorstehenden Ansprüche, wobei die Kommunikationseinrichtung (110) ferner einen Sensor (119) umfasst, der konfiguriert ist, Daten zu sammeln, und wobei das Sicherheitssystem ferner konfiguriert ist, den Zugriff auf den Sensor (119) auf einen oder mehrere ausgewählte Sätze des einen oder der mehreren Sätze von Sicherheitsdomänen (111a-c, 113a-c, 115a-c) einzuschränken.

12. Kommunikationseinrichtung (110) nach einem der vorstehenden Ansprüche, wobei die Kommunikationseinrichtung (110) ferner einen Aktuator (121) umfasst, und wobei das Sicherheitssystem ferner konfiguriert ist, den Zugriff auf den Aktuator (121) auf einen oder mehrere ausgewählte Sätze des mehr als einen Satzes von Sicherheitsdomänen (111a-c, 113a-c, 115a-c) einzuschränken.

13. Kommunikationseinrichtung (110) nach einem der vorstehenden Ansprüche, wobei die Kommunikationseinrichtung (110) konfiguriert ist, über ein Schmalband-IoT-Kommunikationsnetz (100) zu kommunizieren.

14. Verfahren (300)zum Betreiben einer Kommunikationseinrichtung (110) zum Kommunizieren von Daten über ein Low Power Wide Area (LPWA, Niedrigenergieweitverkehr)-Kommunikationsnetz (100), wobei die Kommunikationseinrichtung (110) einen Prozessor (111), der konfiguriert ist, Daten zu verarbeiten, einen Speicher (113, 115), der konfiguriert ist, Daten zu speichern, und eine Funkeinrichtung (117), die konfiguriert ist, Daten über das LPWA-Kommunikationsnetz (100) zu senden und/oder zu empfangen, umfasst, wobei das Verfahren (300)
**gekennzeichnet ist durch**
Betreiben (301) von mehr als einem logisch getrennten Satz von Sicherheitsdomänen (111a-c, 113a-c, 115a-c), einschließlich eines ersten Satzes von Sicherheitsdomänen (111a, 113a, 115a), auf dem Prozessor (111) und dem Speicher (113, 115), wobei jeder Satz von Sicherheitsdomänen (111a-c, 113a-c, 115a-c) eine Prozessor-Sicherheitsdomäne (llla-c) und eine Speicher-Sicherheitsdomäne (113a-c, 115a-c) umfasst, die konfiguriert sind, miteinander zu wechselwirken, um mindestens eine jeweilige Sicherheitsfunktion zu liefern, wobei das Sicherheitssystem ferner konfiguriert ist, den Zugriff auf die Funkeinrichtung (117) auf den ersten Satz von Sicherheitsdomänen (111a, 113a, 115a) einzuschränken, und wobei die Prozessor-Sicherheitsdomäne (111a) und die Speicher-Sicherheitsdomäne (113a, 115a) des ersten Satzes von Sicherheitsdomänen (111a, 113a, 115a) konfiguriert sind, miteinander zum Authentifizieren der Kommunikationseinrichtung (110a-d) innerhalb des LPWA-Kommunikationsnetzes (100) zu wechselwirken.

15. Computerprogrammprodukt, umfassend einen Programmcode zum Durchführen des Verfahrens (300) nach Anspruch 14, wenn es auf einem Computer oder einem Prozessor ausgeführt wird.

## Revendications

1. Dispositif de communication (110) pour communiquer des données sur un réseau de communication (100) large zone à faible puissance, LPWA, dans lequel le dispositif de communication (110) comprend :
un processeur (111) configuré pour traiter des données ;
une mémoire (113, 115) configurée pour stocker des données ;
une radio (117) configurée pour transmettre et/ou recevoir des données sur le réseau de communication LPWA (100) ; et
un système de sécurité ;
**caractérisé en ce que**
le système de sécurité est configuré pour faire fonctionner plus d'un ensemble logiquement séparé de domaines de sécurité (111a-c, 113a-c, 115a-c), y compris un premier ensemble de domaines de sécurité (111a, 113a, 115a), sur le processeur (111) et la mémoire (113, 115), dans lequel chaque ensemble de domaines de sécurité comprend un domaine de sécurité de processeur (llla-c) et un domaine de sécurité de mémoire (113a-c, 115a-c), qui sont configurés pour interagir les uns avec les autres pour fournir au moins une fonction de sécurité respective, dans lequel le système de sécurité est en outre configuré pour restreindre l'accès à la radio (117) au premier ensemble de domaines de sécurité (111a, 113a, 115a), et dans lequel le domaine de sécurité du processeur (111a) et le domaine de sécurité de mémoire (113a, 115a) du premier ensemble de domaines de sécurité (111a, 113a, 115a) sont configurés pour interagir l'un avec l'autre pour authentifier le dispositif de communication (110a-d) au sein du réseau de communication LPWA(100).

2. Dispositif de communication (110) selon la revendication 1, dans lequel le processeur (111) est configuré pour mettre en œuvre un environnement d'exécution en temps réel (112) basé sur un système d'exploitation en temps réel et dans lequel le système de sécurité est configuré pour faire fonctionner les domaines de sécurité de processeur respectifs (111a-c) de plus d'un ensemble de domaines de sécurité (111a-c, 113a-c, 115a-c) en parallèle à l'environnement d'exécution en temps réel (112).

3. Dispositif de communication (110) selon la revendication 2, dans lequel la mémoire (113, 115) comprend en plus des domaines de sécurité de mémoire respectifs (113a-c, 115a-c) de plus d'un ensemble de domaines de sécurité (111a-c, 113a-c, 115a-c) et une partie de mémoire en temps réel (114, 116) qui est configurée pour être accessible à partir de l'environnement d'exécution en temps réel (112) et des domaines de sécurité de processeur respectifs (llla-c) de plus d'un ensemble de de domaines de sécurité (111a-c, 113a-c, 115a-c).

4. Dispositif de communication (110) selon une quelconque des revendications précédentes, dans lequel la mémoire (113, 115) comprend une RAM (113), une ROM et/ou une mémoire Flash (115).

5. Dispositif de communication (110) selon une quelconque des revendications précédentes, dans lequel le domaine de sécurité de mémoire (113a, 115a) du premier ensemble de domaines de sécurité (111a, 113a, 115a) comprend une clé d'authentification cryptographique pour authentifier le dispositif de communication (110a-d) au sein du réseau de communication LPWA (100).

6. Dispositif de communication (110) selon une quelconque des revendications précédentes, dans lequel au moins un des domaines de sécurité de mémoire (113a-c, 115a-c) de plus d'un ensemble de domaines de sécurité (111a-c, 113a-c, 115a-c) comprend une clé de cryptage cryptographique pour crypter des données.

7. Dispositif de communication (110) selon une quelconque des revendications précédentes, dans lequel le plus d'un ensemble de domaines de sécurité (111a-c, 113a-c, 115a-c) comprend en outre un deuxième ensemble de domaines de sécurité (111b, 113b, 115b) et dans lequel le système de sécurité est configuré pour restreindre en outre l'accès au premier ensemble de domaines de sécurité (111a, 113a, 115a) à une première entité et restreindre l'accès au deuxième ensemble de domaines de sécurité (111b, 113b, 115b) à une deuxième entité, dans lequel le système de sécurité est configuré en outre pour faire fonctionner un autre domaine de sécurité de mémoire (113c, 115c) pour être accessible à la fois par la première entité et la deuxième entité.

8. Dispositif de communication (110) selon la revendication 7, dans lequel le système de sécurité est configuré pour restreindre en outre l'accès au premier ensemble de domaines de sécurité (111a, 113a, 115a) à la première entité sur la base d'un premier ensemble de règles de contrôle d'accès et pour restreindre l'accès au deuxième ensemble de domaines de sécurité (111b, 113b, 115b) à la deuxième entité sur la base d'un deuxième ensemble de règles de contrôle d'accès, dans lequel le deuxième ensemble de règles de contrôle d'accès diffère du premier ensemble de règles de contrôle d'accès.

9. Dispositif de communication (110) selon une quelconque des revendications précédentes, dans lequel le processeur (111), la mémoire (113, 115) et la radio (117) sont implémentés sous la forme d'un système sur puce.

10. Dispositif de communication (110) selon une quelconque des revendications précédentes, dans lequel le dispositif de communication (110) comprend en outre un bus de communication (118), dans lequel le bus de communication (118) est configuré pour échanger des données entre le processeur (111), la mémoire (113, 115) et la radio (117).

11. Dispositif de communication (110) selon une quelconque des revendications précédentes, dans lequel le dispositif de communication (110) comprend en outre un capteur (119) configuré pour collecter des données et dans lequel le système de sécurité est en outre configuré pour restreindre l'accès au capteur (119) à un ou plusieurs ensembles sélectionnés du ou des ensembles de domaines de sécurité (111a-c, 113a-c, 115a-c) .

12. Dispositif de communication (110) selon une quelconque des revendications précédentes, dans lequel le dispositif de communication (110) comprend en outre un actionneur (121) et dans lequel le système de sécurité est en outre configuré pour restreindre l'accès à l'actionneur (121) à un ou plusieurs ensembles sélectionnés de d'un ensemble de domaines de sécurité (111a-c, 113a-c, 115a-c).

13. Dispositif de communication (110) selon une quelconque des revendications précédentes, dans lequel le dispositif de communication (110) est configuré pour communiquer sur un réseau de communication IoT à bande étroite (100).

14. Procédé (300) de fonctionnement d'un dispositif de communication (110) pour communiquer des données sur un réseau de communication (100) à large zone à faible puissance, LPWA, le dispositif de communication (110) comprenant un processeur (111) configuré pour des données de processus, une mémoire (113, 115) configurée pour mémoriser des données et une radio (117) configurée pour transmettre et/ou recevoir des données sur le réseau de communication LPWA (100), dans lequel le procédé (300) est
**caractérisé par**
le fonctionnement (301) de plus d'un ensemble logiquement séparé de domaines de sécurité (111a-c, 113a-c, 115a-c) comprenant un premier ensemble de domaines de sécurité (111a, 113a, 115a), sur le processeur (111) et la mémoire (113, 115), dans lequel chaque ensemble de domaines de sécurité (111a-c, 113a-c, 115a-c) comprend un domaine de sécurité de processeur (llla-c) et un domaine de sécurité de mémoire (113a-c, 115a-c), qui sont configurés pour interagir les uns avec les autres pour fournir au moins une fonction de sécurité respective, dans lequel le système de sécurité est en outre configuré pour restreindre l'accès à la radio (117) au premier ensemble de domaines de sécurité (111a, 113a, 115a), et dans lequel le domaine de sécurité de processeur (111a) et le domaine de sécurité de mémoire (113a, 115a) du premier ensemble de domaines de sécurité (111a, 113a, 115a) sont configurés pour interagir l'un avec l'autre pour authentifier le dispositif de communication (110a-d) dans le réseau de communication LPWA (100).

15. Produit de programme informatique comprenant un code de programme pour exécuter le procédé (300) selon la revendication 14, lorsqu'il est exécuté sur un ordinateur ou un processeur.
